(19) Europäisches Patentamt
European Patent Office
Office européen des brevets

(11) **EP 3 609 348 B1**

(12) **EUROPEAN PATENT SPECIFICATION**

(45) Date of publication and mention
of the grant of the patent:
**14.12.2022 Bulletin 2022/50**

(21) Application number: **18715733.4**

(22) Date of filing: **10.04.2018**

(51) International Patent Classification (IPC):
**A23L 7/10** *(2016.01)*   **A23J 3/14** *(2006.01)*
**A23J 3/22** *(2006.01)*   **A23J 3/26** *(2006.01)*
**A23L 7/117** *(2016.01)*   **A23L 33/185** *(2016.01)*
**A23L 33/21** *(2016.01)*

(52) Cooperative Patent Classification (CPC):
**A23L 7/115; A23J 3/14; A23J 3/22; A23J 3/227;**
**A23J 3/26; A23L 7/117; A23L 33/185; A23L 33/21**

(86) International application number:
**PCT/EP2018/059131**

(87) International publication number:
**WO 2018/189160 (18.10.2018 Gazette 2018/42)**

(54) **TEXTURIZED PROTEIN PRODUCT**

TEXTURIERTES PROTEINPRODUKT

PRODUIT PROTÉIQUE TEXTURÉ

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **11.04.2017 EP 17166060**

(43) Date of publication of application:
**19.02.2020 Bulletin 2020/08**

(73) Proprietor: **Valio Oy**
**00370 Helsinki (FI)**

(72) Inventors:
• **ITKONEN, Maija**
**00560 Helsinki (FI)**
• **KIVELÄ, Reetta**
**00210 Helsinki (FI)**
• **JIANG, Zhong-Qing**
**00620 Helsinki (FI)**

(74) Representative: **Genip Oy**
**Heikinkatu 7**
**48100 Kotka (FI)**

(56) References cited:
**WO-A1-2008/036906      WO-A1-2017/064172**
**WO-A2-2016/035058      US-A1- 2008 248 167**
**US-A1- 2008 254 199**

## Description

### Field of the invention

The present invention relates to a texturized protein product.

### Technical background

Recently consumers have been showing a growing interest in sustainable and healthy diet. This has led to an increase in plant-based products that can be used to replace meat in a daily diet. In order to gain a wider acceptance among mainstream consumers these plant-based products, i.e. meat substitutes, should be easy to prepare and provide nutritionally balanced meals. Furthermore, they should provide an appealing and pleasant mouth-feel, even when heated, cooked and/or fried. Generally, it is desired that the appearance and the mouth-feel of the plant-based product should provide the consumer a meat-like experience.

A general problem is that most of the plant-based products are not able to mimic the meaty appearance and mouth-feel in a satisfactory manner. The products can have unpleasant gummy texture, especially when they are heated, and they are not able to provide crispy mouth-feel after frying on a pan. Many of the products, which are provided as meat substitutes, are based on soya, which may induce a beany-taste and rubbery or slimy structure to the product. Some commercially available products are based on mixtures of oat and legumes. These products are more satisfactory in their taste and mouth-feel, but there is a constant need to improve the meat-like appearance and general acceptability of the plant-based products which are intended for use as meat substitutes.

WO 2008/036906 discloses an animal meat compositions and simulated animal meat compositions, as well as a process for producing structured coloured protein-containing products. The process comprises co-extruding a protein-containing material and a reducing sugar under conditions of elevated temperature and pressure.

US 2008/0248167 discloses processed meat compositions comprising structured protein products having substantially aligned protein fibres and reprocessed meat products.

US 2008/0254199 discloses a process for producing a coloured structured protein product with protein fibres that are substantially aligned and the resultant product. The plant protein is combined with a colourant and extruded, forming the desired product.

WO 2016/035058 concerns an extended shelf-life proteinaceous meat analogue comprising vegetable protein among which at least wheat gluten and a plasticizer, the meat analogue having a water content of less than 20 % and specified torque value. Also, a method for obtaining the desired meat analogue is disclosed.

WO 2017/064172 discloses a method foe manufacturing a textured food product and a textured food product. The method comprises preparing a slurry comprising water and dry matter comprising legume protein; oat bran, wholegrain oat flour or their mixture; oat protein. The dry matter of oat protein and oat bran, whole grain oat flour or their mixture must always add up to no more than 65 weight-%.Slurry is cooked in an extruder cooker and extruded.

### Objective of the invention

An objective of the present invention is to improve cooking properties of texturized food products that are manufactured by cooking starting materials in an extruder cooker and extruding them to form the texturized food product. Further, the texturized protein product has to provide an enhanced mouthfeel and a meat-like appearance, when the product is fried.

Another object of the invention is to provide a texturized protein product, which provides balanced composition, even in view of nutrients and/or micronutrients.

These objects are attained with the texturized protein product according to claim 1.

The dependent claims describe further advantageous embodiments of the texturized protein product.

### Advantages of the invention

The protein product

a) is prepared from legume material comprising legume protein and cereal material comprising bran and cereal protein, excluding wheat, the cereal material selected from a group consisting of oat, barley, rye and any mixture of these, preferably oat, and

b) comprises particles having at least partially fibrous structure, where at least 80 % of fibres have a length in the range 1 - 30 mm and a thickness in the range of 5-35 $\mu$m.

c) the oil absorption ratio of the texturized protein product has been controlled by modifying the particle size distribution to result in the oil absorption ratio to be between 8% and 45%, preferably between 13% and 35%, more preferably between 14% and 30% such that

d) the product comprises at least 70 weight-% of particles having a particle size ≥ 1 cm and less than 20 weight-% of particles having the particle size ≥ 4 cm, whereby 100 weight-% of the particles have the particle size ≤ 7 cm, more precisely

    d1)

- 5 - 30 weight-%, preferably 8 - 26 weight-%, more preferably 10-21 weight-% of the particles having the particle size < 1 cm;
- 60 - 95 weight-%, preferably 66 - 88 weight-%, more preferably 71 - 83 weight-% of the particles having the particle size in the range of 1 - <4 cm;
- 0 - 20 weight-%, preferably 0-16 weight-%, more preferably 0-7 weight-% of the particles having the particle size in the range of 4 - 7 cm.
    and/or

    d2)

- 10 - 45 weight-%, preferably 15 - 40 weight-%, more preferably 20 - 35 weight-% of the particles having the particle size in the range of 1 - <2 cm;
- 20 - 50 weight-%, preferably 25 - 45 weight-%, more preferably 30 - 40 weight-% of the particles having the particle size in the range of 2 - <3 cm;
- 5 - 40 weight-%, preferably 10 - 35 weight-%, more preferably 12-24 weight-% of the particles having the particle size in the range of 3 - 4 cm.

It has been observed that the amount of particles in different size categories is important for creating the desired mount-feel and the meat-like illusion.

The defined particle size distribution has a major impact in and enhances the mouthfeel of the texturized protein product. The inventors have observed that the particle size distribution has an unexpectedly strong impact on the consumer perception and approval of the product. The small particles (< 2 g) absorb more oil than large particles (> 10 g). Thus, the oil absorption ratio can be controlled by modifying the particle size distribution. On one hand, if the oil absorption ratio is too high, an excessive amount of oil is needed during the cooking to obtain an even wetting of the surfaces of the product particles by oil. On the other hand, if the oil absorption is low, the desired cooking effect, e.g. the formation of a crispy surface on the product particles, may not be achieved. The particle size distribution can be modified by limiting processing in the extrusion cooking, such as, in particular, limiting mixing power.

The particle size distribution according to the present invention was found to provide together with the other properties of the product an enhanced feeling of minced or chopped beef or well-prepared chicken. It is assumed, without wishing to be bound by a theory, that the specified particle size distribution somehow corresponds to the human perception of well-prepared meat and improves the mouth-feel of the product.

**Detailed description**

In the present context "texturized protein product" is understood as solid fibrous product, which is produced from cereal material and legume material by cooking the starting materials in an extruder cooker and extruding them to form a texturized food product. Suitable production processes are disclosed e.g. in patent applications EP 15190251.7 and PCT/EP2016/074556. It has been observed that the processing parameters, e.g. mixing power, can be suitably adjusted for production of texturized protein product according to the present invention. For example, if the processing is too strong, the particle size may become too small.

The particles of the texturized protein product have often an irregular shape. Particle size, in the present context, refers to the largest dimension of a particle, which is measured by drawing a straight line from an outer edge of the particle through the centre of the particle to the opposite edge of the particle.

In the present context the term "cereal" denotes grains from grasses of family Poaceae, excluding however wheat. This means that the texturized protein product is free from wheat. Examples of cereals are oat, barley, rye, rice, corn and any mixture thereof. According to one preferable embodiment the cereal material comprises oat, more preferably the cereal material is oat. Exclusion of wheat makes the ready-to-eat texturized protein product preferably low in gluten, especially wheat gluten, sometimes preferably completely gluten-free. It is surprising that the fibrous texture can be achieved even if the gluten content is low or completely without gluten, especially wheat gluten. According to one embodiment the texturized protein product may contain only minor amounts of gluten, especially wheat gluten, such as < 1 weight-%, preferably < 0.5 weight-%, more preferably < 0.2 weight-%, even more preferably < 0.1 weight-%, calculated from the total dry mass of the product.

The term "cereal material" encompasses all different kinds of material fractions obtainable by processing, such as separation, isolation and/or milling, of said cereals. Cereal material may preferably be whole grain material, which is obtained by milling whole grains of cereal. These grains comprise endosperm, grain and bran. Alternatively, cereal material may also preferably be cereal protein isolated from the grain, processed or unprocessed bran isolated from the grain or processed or unprocessed endosperm isolated from the grain. Cereal material encompasses also mixtures of said materials, for example, a mixture of whole grain material and isolated cereal protein. It is possible to optimise the nutrient content of the texturized protein product by appropriately selecting and mixing the above-mentioned starting materials.

According to one embodiment of the invention the texturized protein product comprises cereal protein in total amount in the range of 5 - 35 weight-%, preferably 7 - 25 weight-%, more preferably 11 - 17 weight-%, calculated from the total dry mass of the product. The total amount of cereal protein includes both the natural cereal protein present in the cereal material and optional added isolated cereal protein. It has been observed that this amount of cereal protein provides good nutritional composition as well as easy processability during the production.

The cereal material comprises bran. Bran may originate from the use of whole grain cereal material or it may originate from bran fraction separated from whole grain. According to one preferable embodiment the cereal material comprises whole grain cereal material and/or isolated cereal bran material. It is possible to influence the mouth-feel and/or physical properties of the texturized protein product by careful selection of the type and/or amount of the whole grain material and/or bran material used for preparing the product. For example bran, either isolated or included in the whole grain cereal material, improves the texture of the protein product by optimising it chewability. By changing the amount of bran it is possible to influence the firmness and/or mouth-feel of the product. The product may comprise whole grain cereal material and/or bran, i.e. cereal bran, in amount of 5 - 44 weight-%, preferably 12 - 40 weight-%, more preferably 15 - 26 weight-%, calculated from the total dry mass of the product.

The cereal is selected from a group consisting of oat, barley, rye, and any mixture of these, preferably oat. By selection of the type of the cereal material or by selection of the cereal and their amounts in a mixture of different cereal materials it is possible to influence the structure and composition of the obtained texturized protein product. According to one preferable embodiment the cereal material comprises oat bran, optionally as a mixture with oat protein. Preferably cereal material comprises at least 50 weight-%, more preferably at least 85 weight-%, of oat material, calculated from the total weight of the cereal material. According to one preferred embodiment the cereal material consists solely of oat. In addition to texture of the product oat bran improves the nutritional composition of the product, e.g. by increasing the amount of beta glucan in the product.

The texturized protein product is free from wheat, and preferably free from wheat protein and/or gluten.

In addition to cereal material the textured protein product is produced from legume material comprising legume protein. In the present context, legume material encompasses both legume material, e.g. legume powder or flour, which contains natural amounts of legume protein, as well as legume material to which has been added isolated legume protein and which contains elevated amounts of legume protein. Suitable legume material is, for example, plants from the family *Fabaceae* (or *Leguminosae*), or the fruit or seed of such a plant. Suitable legume material include alfalfa, clover, different species of peas, different species of beans, different species of vicia fabas, lentils, lupins, mesquite, carob, peanuts and tamarind. Preferably legume material is selected from species of peas and vicia fabas, most preferably from species of peas.

The texturized protein product is preferably free from soy, soy protein, soy-based material and/or soy derived components. It is unexpected that a texturized product with high protein content can be prepared without using soy or soy-based material. The possibility to exclude soy is advantageous, because soy is relatively allergenic. Furthermore, exclusion of soy makes it easier to produce products that are free from organisms whose genetic material has been altered using genetic engineering techniques, i.e. GMO-free products.

According to one embodiment of the invention the texturized protein product comprises legume protein in total amount in the range of 35 - 60 weight-%, preferably 37 - 55 weight-%, more preferably 41 - 51 weight-%, calculated from the total dry mass of the product. The total amount of legume protein includes both the natural legume protein present in the legume material and optional added isolated legume protein.

The texturized protein product may be prepared from 50 - 70 weight-%, preferably 56 - 66 weight-%, of legume material, and 30 - 50 weight-%, preferably 34 - 44 weight-%, of cereal material, calculated as dry matter. Legume material and cereal material in the product may be carefully selected not only in order to provide optimal structure for the product but also for providing the texturized protein product with optimal amounts of various micronutrients.

According to one preferable embodiment the texturized protein product is completely free from animal-based constituents, such as meat, animal fats, milk, skin, gelatine, eggs and blood. This makes the product suitable for all consumer groups, irrespective for their religious and/or ethical beliefs. This means that there is no need to modify the basic recipe of the product depending on the specific market segment requirements.

The texturized protein product may have a bulk density of at least 0.15 g/ml, preferably at least 0.3 g/ml. The bulk density may be in the range 0.15 - 1.5 g/ml, preferably 0.24 - 1.2 g/ml, more preferably 0.3 - 1.0 g/ml, even more preferably 0.4 - 0.8 g/ml. Bulk density can be determined by 1) taking a defined amount of a sample, between 40 - 50 g; 2) cutting/chopping the sample into particles having a largest dimension between 3 - 5 mm; 3) measuring the exact weight of the cut/chopped sample; 4) measuring the volume of the sample; and 5) calculating the bulk density.

Furthermore, it has been observed that the particle size distribution is an important parameter for controlling the oil absorption ratio of the texturized protein product. This means that it is possible to change the oil absorption ratio by modifying the particle size distribution, as the small particles (< 2 g) absorb more oil than large particles (> 10 g). The texturized protein product, having a particle size distribution as defined above, has an oil absorption ratio in the range of 8 - 45 %, preferably 13 - 35 %, more preferably 14 - 30 %. The oil absorption is measured as follows:

(1) weigh a desired amount of product sample, typically ca 250 g, and record the result as the "Original weight";
(2) immerse the sample into edible liquid oil, such as rapeseed oil, in a beaker-like container, at room temperature;
(3) after a defined period of time (minimum 15 min) separate the sample (which now contains absorbed oil) from the rest of the oil by sieving or filtering;
(4) weigh the sample containing absorbed oil and record the result as "Weight after absorbing oil".

The oil absorption ratio can then be calculated by using the equation:

$$absorption\ ratio = \frac{Weight\ after\ absorping\ oil - Original\ weight}{Original\ weight} \times 100\ \%$$

If the oil absorption ratio is too high, an excessive amount of oil is needed during the cooking to obtain an even wetting of the surfaces of the product particles by oil. On the other hand, if the oil absorption is low, the desired cooking effect, e.g. the formation of a crispy surface on the product particles, may not be achieved.

It is also possible to determine the oil absorption ratio for individual particle size categories. According to one embodiment of the invention the particles of the textured protein product having weight < 2 g have an oil absorption ratio in the range of 20 - 45 %, preferably 25 - 40 %; the particles of the textured protein product having weight 2 - 4 g have an oil absorption ratio in the range of 10 - 30 %, preferably 15 - 25 %; and the particles of the textured protein product having weight > 4 g have an oil absorption ratio in the range of 8 - 28 %, preferably 13 - 23 %.

Texturized protein product comprises particles having at least partially fibrous structure. The fibres are formed during the manufacturing process from the used raw materials, i.e. legume material and cereal material. The fibres are proteinaceous fibres, which are formed from the proteins contained in the raw materials. The individual fibres of the product may have a thickness in the range of 5 - 35 μm. The length of the individual fibres is at least partially dependent on the size of the product particles and may be in the range of 35 - 30 000 μm. The proteinaceous fibres are preferably three-dimensionally entangled, and the fibrous structure preferably comprises voids between the proteinaceous fibres. The three-dimensional entanglement of the proteinaceous fibres means that the texturized protein product preferably comprises proteinaceous fibres of which > 20%, more preferably > 30%, even more preferably > 40 %, are at the angle of 35 - 90°, preferably 40 - 90°, in relation to each other. The fibre direction measurement is done by a taking an arbitrary sample of 10 mm × 10 mm, and then visually assessing the fibre directions. The fibre direction may also be assessed by using an imagining system, such as micro-computed tomography scanner. The three-dimensional entanglement of the proteinaceous fibres provides a product which has uniform cutting shear resistance in every direction, which greatly improves the mouth-feel of the product. According to one embodiment of the invention the difference in cutting shear resistance values in three perpendicular directions is less than 30%, preferably less than 20%, more preferably less than 10%.

According to one embodiment of the invention the texturized protein product comprises vegetable oil, such as rape seed oil, sun flower oil, olive oil or any mixture thereof. Vegetable oil may be added to the texturized protein product in order to improve its fatty acid content.

Furthermore, the texturized protein product has carbohydrates to protein ratio < 1, preferably < 0.5, more preferably < 0.35. This ratio is beneficial when the product is used as a part of diet for weight-control purposes. Carbohydrates to protein ratio of the texturized protein product is also advantageous for maintain and/or increasing muscle mass and for bone health.

According to one embodiment of the invention the texturized protein product may comprise potassium in amount of 400 - 1600 mg, preferably 600 - 1200 mg, more preferably 660 - 1000 mg, and/or magnesium in amount of 80 - 220 mg, preferably 100 - 180 mg, more preferably 140 - 160 mg, given per 100 g of dry product. For example, the magnesium amount in the protein product provides necessary supply of magnesium for persons leading physically active lifestyle.

The texturized protein product may further comprise zinc in amount of 2 - 20 mg, preferably 4 - 14 mg, more preferably 5 - 10 mg; phosphorus in the amount of 600 - 1200 mg, preferably 840 - 1000 mg; and/or iron in the amount of 6 - 20 mg, preferably 8 - 16 mg, given per 100 g dry product. These values provide a balanced composition of necessary nutrients in the protein product.

Preferably the texturized protein product comprises less than 1 μg/g of acrylamide. This means that the texturized protein product also fulfils the requirements of food regulations.

The texturized protein product may further comprise taste enhancers, such as salt and/or spices. The amount of taste enhancers may be less than 15 weight-%, preferably less than 10 weight-%, more preferably less than 8 weight-%, calculated from the total dry mass of the product. It has been observed that addition of suitable taste enhancers may also improve the storage properties of the product and/or improve the frying properties of the product by creating a crispy surface feeling.

The moisture content of the textured protein product may be in the range of 40 - 60 weight-%, preferably 49 - 54 weight-%, more preferably 50 - 52 weight-%.

The texturized protein product may have a water activity $a_w$ in the range 0.920 - 0.980, preferably 0.925 - 0.955. This means that the protein product has a good microbial stability and long shelf life.

Even if the invention was described with reference to what at present seems to be the most practical and preferred embodiments, it is appreciated that the invention shall not be limited to the embodiments described above, but the invention is intended to cover also different modifications and equivalent technical solutions within the scope of the enclosed claims.

**Claims**

1. Texturized protein product, which:

a) is prepared from legume material comprising legume protein and cereal material comprising bran and cereal protein, excluding wheat, wherein the cereal material is selected from a group consisting of oat, barley, rye and any mixture of these, preferably oat, and
b) comprises particles having at least partially fibrous structure, where at least 80 % of fibres have a length in the range 1 - 30 mm and a thickness in the range of 5 - 35 μm,

and **wherein:**

c) the oil absorption ratio of the texturized protein product has been controlled by modifying the particle size distribution to result in the oil absorption ratio to be between 8% and 45% such that
d) the product comprises at least 70 weight-% of particles having a particle size ≥ 1 cm and less than 20 weight-% of particles having the particle size ≥ 4 cm, whereby 100 weight-% of the particles have the particle size ≤ 7 cm, more precisely

d1)

- 5 - 30 weight-%, preferably 8-26 weight-%, more preferably 10-21 weight-% of the particles having the particle size < 1 cm;
- 60 - 95 weight-%, preferably 66 - 88 weight-%, more preferably 71 - 83 weight-% of the particles having the particle size in the range of 1 - <4 cm;
- 0 - 20 weight-%, preferably 0-16 weight-%, more preferably 0-7 weight-% of the particles having the particle size in the range of 4 - 7 cm;
and/or

d2)

- 10 - 45 weight-%, preferably 15 - 40 weight-%, more preferably 20 - 35 weight-% of the particles having the particle size in the range of 1 - <2 cm;
- 20 - 50 weight-%, preferably 25 - 45 weight-%, more preferably 30 - 40 weight-% of the particles having the particle size in the range of 2 - <3 cm;
- 5 - 40 weight-%, preferably 10-35 weight-%, more preferably 12 - 24 weight-% of the particles having the particle size in the range of 3 - 4 cm.

**2.** The texturized protein product according to claim 1, wherein: the oil absorption ratio is between 13% and 35%.

**3.** The texturized protein product according to claim 1, wherein: the oil absorption ratio is between 14% and 30%.

**4.** Texturized protein product according to any one of the preceding claims, **characterized in that** the product is free from soy and/or soy-based material.

**5.** Texturized protein product according to any one of the preceding claims, **characterized in that** the fibres are three-dimensionally entangled, and the fibrous structure preferably comprises voids between the fibres.

**6.** Texturized protein product according to any one of the preceding claims, **characterized in that** the product comprises vegetable oil, such as rape seed oil, sun flower oil, olive oil.

**7.** Texturized protein product according to any one of the preceding claims, **characterized in that** the product has carbohydrates to protein ratio < 1, preferably < 0.5, more preferably < 0.35.

**8.** Texturized protein product according to any one of the preceding claims, **characterized in that** the product comprises

- potassium in amount of 400 - 1600 mg, preferably 600 - 1200 mg, more preferably 660 - 1000 mg, and/or
- magnesium in amount of 80 - 220 mg, preferably 100 - 180 mg, more preferably 140 - 160 mg,

given per 100 g dry product.

**9.** Texturized protein product according to any one of the preceding claims, **characterized in that** the product comprises

- zinc in amount of 2 - 20 mg, preferably 4 - 14 mg, more preferably 5 - 10 mg, and/or
- phosphorus in amount of 600 - 1200 mg, preferably 840 - 1000 mg, and/or
- iron in amount of 6 - 20 mg, preferably 8-16 mg,

given per 100 g dry product.

**10.** Texturized protein product according to any one of the preceding claims, **characterized in that** the cereal material comprises whole grain cereal and cereal bran.

**11.** Texturized protein product according to any one of the preceding claims, **characterized in that** the product is free from animal-based constituents.

**12.** Texturized protein product according to any one of the preceding claims, **characterized in that** the product is prepared from 50 - 70 weight-%, preferably 56 - 66 weight-%, of legume material and 30 - 50 weight-%, preferably 34 - 44 weight-%, of cereal material, calculated as dry matter.

**13.** Texturized protein product according to any one of the preceding claims, **characterized in that** it comprises cereal protein in the range of 5 - 35 weight-%, preferably 7 - 25 weight-%, more preferably 11 - 17 weight-%; and/or legume protein in total amount in the range of 35 - 60 weight-%, preferably 37 - 55 weight-%, more preferably 41 - 51 weight-%, calculated from the total dry mass of the product.

**14.** Texturized protein product according to any one of the preceding claims, **characterized in that** it comprises bran in amount of 5 - 44 weight-%, preferably 12-40 weight-%, more preferably 15-26 weight-%, calculated from the total dry mass of the product.

**Patentansprüche**

**1.** Mit Textur versehenes Proteinprodukt, das:

a) aus Hülsenfruchtmaterial zubereitet ist, das Hülsenfruchtprotein und Getreidematerial umfasst, das Kleie und Getreideprotein, ohne Weizen, umfasst, in dem das Getreidematerial aus einer Gruppe bestehend aus Hafer, Gerste, Roggen und einer Mischung aus diesen ausgewählt wird, vorzugsweise Hafer und

b) Partikel mit mindestens teilweise faseriger Struktur umfasst, wo mindestens 80 % der Fasern eine Länge im Bereich 1 - 30 mm und eine Stärke im Bereich von 5 - 35 $\mu$m aufweisen,

**und in dem:**

c) das Ölabsorptions-Verhältnis des mit Textur versehenen Proteinprodukts durch Modifikation der Verteilung der Partikelgröße gesteuert wurde, damit das Ölabsorptions-Verhältnis zwischen 8% und 45% beträgt, so dass
d) das Produkt mindestens zu 70 Gewichts% Partikel mit einer Partikelgröße $\geq$ 1 cm und weniger als 20 Gewichts% Partikel mit der Partikelgröße $\geq$ 4 cm umfasst, wonach 100 Gewichts% der Partikel die Partikelgröße $\leq$ 7 cm aufweisen, genauer

d1)

- 5 - 30 Gewichts%, vorzugsweise 8 - 26 Gewichts%, noch besser 10 - 21 Gewichts% der Partikel die Partikelgröße < 1 cm aufweisen;
- 60 - 95 Gewichts%, vorzugsweise 66 - 88 Gewichts%, noch besser 71 - 83 Gewichts% der Partikel die Partikelgröße im Bereich von 1 - <4 cm aufweisen;
- 0 - 20 Gewichts%, vorzugsweise 0-16 Gewichts%, noch besser 0 - 7 Gewichts% der Partikel die Partikelgröße im Bereich von 4 - 7 cm aufweisen;
und/oder

d2)

- 10 - 45 Gewichts%, vorzugsweise 15 - 40 Gewichts%, noch besser 20 - 35 Gewichts% der Partikel die Partikelgröße im Bereich von 1 - <2 cm aufweisen;
- 20 - 50 Gewichts%, vorzugsweise 25 - 45 Gewichts%, noch besser 30 - 40 Gewichts% der Partikel die Partikelgröße im Bereich von 2 - <3 cm aufweisen;
- 5 - 40 Gewichts%, vorzugsweise 10 - 35 Gewichts%, noch besser 12 - 24 Gewichts% der Partikel die Partikelgröße im Bereich von 3 - 4 cm aufweisen.

2. Mit Textur versehenes Proteinprodukt nach Anspruch 1, in dem: das Ölabsorptions-Verhältnis zwischen 13% and 35% liegt.

3. Mit Textur versehenes Proteinprodukt nach Anspruch 1, in dem: das Ölabsorptionsverhältnis zwischen 14% and 30% liegt.

4. Mit Textur versehenes Proteinprodukt, nach einem der vorhergehenden Ansprüche, **dadurch gekennzeichnet, dass** das Produkt frei von Soja und/oder auf Soja basierendem Material ist.

5. Mit Textur versehenes Proteinprodukt nach einem der vorhergehenden Ansprüche, **dadurch gekennzeichnet, dass** die Fasern dreidimensional verworren sind, und die faserige Struktur vorzugsweise Leerräume zwischen den Fasern umfasst.

6. Mit Textur versehenes Proteinprodukt nach einem der vorhergehenden Ansprüche, **dadurch gekennzeichnet, dass** das Produkt Pflanzenöl enthält, wie Rapskernöl, Sonnenblumenöl, Olivenöl.

7. Mit Textur versehenes Proteinprodukt nach einem der vorhergehenden Ansprüche, **dadurch gekennzeichnet, dass** das Verhältnis Kohlenhydrate zu Protein des Produkts < 1 ist, vorzugsweise < 0,5, noch besser < 0,35.

8. Mit Textur versehenes Proteinprodukt nach einem der vorhergehenden Ansprüche, **dadurch gekennzeichnet, dass** das Produkt enthält

- Kalium in Höhe von 400 - 1600 mg, vorzugsweise 600 - 1200 mg, noch besser 660
- 1000 mg, und/oder
- Magnesium in Höhe von 80 - 220 mg, vorzugsweise 100 - 180 mg, noch besser 140
- 160 mg,

bestimmt pro 100 g Trockenprodukt.

**9.** Mit Textur versehenes Proteinprodukt nach einem der vorhergehenden Ansprüche, **dadurch gekennzeichnet, dass** das Produkt enthält

- Zink in Höhe von 2-20 mg, vorzugsweise 4 - 14 mg, noch besser 5 - 10 mg, und/oder
- Phosphor in Höhe von 600 - 1200 mg, vorzugsweise 840 - 1000 mg, und/oder
- Eisen in Höhe von 6 - 20 mg, vorzugsweise 8 - 16 mg,

bestimmt pro 100 g Trockenprodukt.

**10.** Mit Textur versehenes Proteinprodukt nach einem der vorhergehenden Ansprüche, **dadurch gekennzeichnet, dass** das Getreidematerial Vollkorngetreide und Getreidekleie umfasst.

**11.** Mit Textur versehenes Proteinprodukt nach einem der vorhergehenden Ansprüche, **dadurch gekennzeichnet, dass** das Produkt frei von Bestandteilen auf tierischer Basis ist.

**12.** Mit Textur versehenes Proteinprodukt nach einem der vorhergehenden Ansprüche, **dadurch gekennzeichnet, dass** das Produkt zubereitet wird aus 50 - 70 Gewichts%, vorzugsweise 56 - 66 Gewichts%, Hülsenfruchtmaterial und 30 - 50 Gewichts%, vorzugsweise 34 - 44 Gewichts%, Getreidematerial, berechnet als Trockensubstanz.

**13.** Mit Textur versehenes Proteinprodukt nach einem der vorhergehenden Ansprüche, **dadurch gekennzeichnet, dass** es Getreideprotein im Bereich von 5 - 35 Gewichts%, vorzugsweise 7 - 25 Gewichts%, noch besser 11 - 17 Gewichts%; und/oder insgesamt Hülsenfruchtprotein im Bereich von 35 - 60 Gewichts%, vorzugsweise 37 - 55 Gewichts%, noch besser 41 - 51 Gewichts%, berechnet von der gesamten Trockenmasse des Produkts.

**14.** Mit Textur versehenes Proteinprodukt nach einem der vorhergehenden Ansprüche, **dadurch gekennzeichnet, dass** es Kleie in Höhe von 5 - 44 Gewichts% umfasst, vorzugsweise 12 - 40 Gewichts%, noch besser 15 - 26 Gewichts%, berechnet von der gesamten Trockenmasse des Produkts.

**Revendications**

**1.** Produit protéique texturé :

a) préparé à partir d'un matériau de légumineuse comprenant une protéine de légumineuse et d'un matériau de céréale comprenant du son et une protéine de céréale, à l'exception du blé, dans lequel le matériau de céréale est sélectionné dans un groupe comprenant avoine, orge, seigle et tout mélange de ces dernières, de préférence de l'avoine, et
b) comprenant des particules présentant au moins partiellement une structure fibreuse, dans laquelle au moins 80 % de fibres présentent une longueur de 1 à 30 mm et une épaisseur de 5 à 35 μm,

et **dans lequel** :

c) le taux d'absorption d'huile dudit produit protéique texturé a été contrôlé en modifiant la distribution granulométrique afin d'obtenir un taux d'absorption d'huile compris entre 8 % et 45 %, de sorte que
d) le produit comprend au moins 70 % en poids de particules ayant une taille > 1 cm et moins de 20 % en poids de particules ayant une taille > 4 cm, 100 % en poids des particules ayant une taille < 7 cm, plus précisément

d1)

- 5 à 30 % en poids, de préférence 8 à 26 % en poids, plus préférablement 10 à 21 % en poids des particules ayant une taille < 1 cm ;
- 60 à 95 % en poids, de préférence 66 à 88 % en poids, plus préférablement 71 à 83 % en poids des particules ayant une taille comprise entre 1 et < 4 cm ;
- 0 à 20 % en poids, de préférence 0 à 16 % en poids, plus préférablement 0 à 7 % en poids des particules ayant une taille comprise entre 4 et 7 cm ;
et/ou

d2)

- 10 à 45 % en poids, de préférence 15 à 40 % en poids, plus préférablement 20 à 35 % en poids des particules ayant une taille comprise entre 1 et < 2 cm ;
- 20 à 50 % en poids, de préférence 25 à 45 % en poids, plus préférablement 30 à 40 % en poids des particules ayant une taille comprise entre 2 et < 3 cm ;
- 5 à 40 % en poids, de préférence 10 à 35 % en poids, plus préférablement 12 à 24 % en poids des particules ayant une taille comprise entre 3 et 4 cm ;

2. Produit protéique texturé selon la revendication 1, dans lequel : le taux d'absorption de l'huile est compris entre 13 % et 35 %.

3. Produit protéique texturé selon la revendication 1, dans lequel : le taux d'absorption de l'huile est compris entre 14 % et 30 %.

4. Produit protéique texturé selon l'une quelconque des revendications précédentes, **caractérisé en ce que** ledit produit ne contient pas de soja et/ou de matériau à base de soja.

5. Produit protéique texturé selon l'une quelconque des revendications précédentes, **caractérisé en ce que** les fibres sont imbriquées en trois dimensions et la structure fibreuse présente de préférence des vides entre les fibres.

6. Produit protéique texturé selon l'une quelconque des revendications précédentes, **caractérisé en ce que** ledit produit comprend de l'huile végétale telle que l'huile de colza, l'huile de tournesol, l'huile d'olive.

7. Produit protéique texturé selon l'une quelconque des revendications précédentes, **caractérisé en ce que** ledit produit présente un rapport glucides/protéines < 1, de préférence < 0,5, plus préférablement < 0,35.

8. Produit protéique texturé selon l'une quelconque des revendications précédentes, **caractérisé en ce que** ledit produit présente

- une teneur en potassium de 400 à 1 600 mg, de préférence 600 à 1 200 mg, plus préférablement 660 à 1 000 mg et/ou
- une teneur en magnésium de 80 à 220 mg, de préférence 100 à 180 mg, plus préférablement 140 à 160 mg,

pour 100 g de produit sec.

9. Produit protéique texturé selon l'une quelconque des revendications précédentes, **caractérisé en ce que** ledit produit présente

- une teneur en zinc de 2 à 20 mg, de préférence 4 à 14 mg, plus préférablement 5 à 10 mg, et/ou
- une teneur en phosphore de 600 à 1 200 mg, de préférence 840 à 1 000 mg, et/ou
- une teneur en fer de 6 à 20 mg, de préférence 8

à 16 mg, pour 100 g de produit sec.

10. Produit protéique texturé selon l'une quelconque des revendications précédentes, **caractérisé en ce que** le matériau de céréale comprend des céréales complètes et du son de céréale.

11. Produit protéique texturé selon l'une quelconque des revendications précédentes, **caractérisé en ce que** ledit produit ne contient aucun ingrédient d'origine animale.

12. Produit protéique texturé selon l'une quelconque des revendications précédentes, **caractérisé en ce que** ledit produit est préparé à partir de 50 à 70 % en poids, de préférence 56 à 66 % en poids de matériau de légumineuse et 30 à 50 % en poids, de préférence 34 à 44 % en poids de matériau de céréales, calculé sur la matière sèche.

13. Produit protéique texturé selon l'une quelconque des revendications précédentes, **caractérisé en ce que** ledit produit présente une teneur en protéine de céréale comprise entre 5 et 35 % en poids, de préférence 7 à 25 % en poids, plus préférablement 11 à 17 % en poids et/ou une teneur totale en protéine de légumineuse comprise entre 35 et 60 % en poids, de préférence 37 à 55 % en poids, plus préférablement 41 à 51 % en poids, calculée sur l'intégralité de la matière sèche du produit.

**14.** Produit protéique texturé selon l'une quelconque des revendications précédentes, **caractérisé en ce que** ledit produit présente une teneur en son comprise entre 5 et 44 % en poids, de préférence 12 à 40% en poids, plus préférablement 15 à 26 % en poids, calculée sur l'intégralité de la matière sèche du produit.

## REFERENCES CITED IN THE DESCRIPTION

**Patent documents cited in the description**

- WO 2008036906 A
- US 20080248167 A
- US 20080254199 A
- WO 2016035058 A
- WO 2017064172 A
- EP 15190251
- EP 2016074556 W